# EUROPEAN PATENT APPLICATION

(11) **EP 3 142 009 A1**
(43) Date of publication of application: **15.03.2017**
(21) Application number: 15306393.8
(22) Date of filing: 11.09.2015
(51) Int. Cl.: G06F 9/50

(54) **A PROGRAM, DEVICE AND METHOD FOR DISPATCHING THE PROCESSING OF A COMPUTER PROCESS AMONGST A PLURALITY OF VIRTUAL MACHINES**

(71) Applicant: Harmonic Inc., San Jose, CA 95134 (US)
(72) Inventor: LE BARS, Eric, 35850 Geveze (FR); MAHE, Arnaud, 35320 Poligne (FR); HENRY, David, 35450 Dourdain (FR)
(74) Representative: Nguyen Van Yen, Christian

(57) **Abstract**

The invention relates to the scheduling of processes in a cluster of physical machines. In the invention, complex processes can be split into elementary processes. To run each elementary process, a Virtual Machine is created and allocated on each physical machine. The Virtual Machine is created in order to have a computing capacity at least equal to a computing load of the elementary process.

## Description

### FIELD OF THE INVENTION

The present invention relates to the field of Virtual Machine handling. More specifically, it relates to the repartition of processes amongst available machines.

### BACKGROUND PRIOR ART

In computing, a virtual machine (also designated by the acronym VM) is an emulation of a particular computer system. Virtual machines operate based on the computer architecture and functions of a real or hypothetical computer, and their implementations may involve specialized hardware, software, or a combination of both.

Classification of virtual machines can be based on the degree to which they implement functionalities of targeted real machines. That way, system virtual machines (also known as full virtualization VMs) provide a complete substitute for the targeted real machine and a level of functionality required for the execution of a complete operating system. On the other hand, process virtual machines are designed to execute a single computer program by providing an abstracted and platform-independent program execution environment.

The use of VMs provides great flexibility in the handling of tasks to execute in parallel. Indeed, VMs can be created and deleted very easily to meet the needs of tasks processing that evolve in real time. In multimedia processing, moreover, VMs provide great flexibility for creating machines with the desired properties, since the actual characteristics of a VM are a combination of software characteristics and characteristics of the hardware machine on which the VM is executed.

In a multimedia head-end server, a plurality of machines, either virtual or hardware, are usually available. When a plurality of tasks are to be executed on a plurality of machines, an orchestrator may be used to dispatch the tasks to perform amongst the machines. Tasks may be created, executed, then ended, and the orchestrator will allocate a task to a machine for its execution.

A straightforward way to achieve this goal is to dispatch a new task on the first machine which is available. However this may create an issue if the available resources on the machine are not sufficient to execute the task properly.

One solution to overcome this issue consists in transferring the execution of the task to another machine. However, when the output of the task has to be delivered in real time, for example if the task relates to video encoding for streaming, transferring the execution of the task to another machine would result in a rupture of service, which is not acceptable.

If the machine on which the task is executed is a VM, another solution consists in increasing the resources of the VM, so that they become sufficient for performing the task properly. This can be achieved for example by increasing the CPU or memory available on the VM. However this solution is not applicable to Hardware Machines. Moreover, it also brings uncertainty for VMs. Indeed, the resources of VMs rely on the resources of the Hardware Machine on which they are executed. Thus, if the resources of the Hardware Machine on which a VM is executed are already reserved, for example by other VMs, it is not possible to increase the resources available for a VM.

European patent application n° 15306385.4 filed by the applicant of this application the same day discloses a method for calculating a computing capacity of a machine which is representative of its ability to perform a multimedia task. It is an object of the invention to disclose a method for dispatching, based on computing capacities of available machines, multimedia tasks amongst said available machines, while ensuring that the available resources of the machines are sufficient to handle the tasks, thus avoiding costly relocation of the task. It is also an object of the invention to dispatch the tasks in a way that allows modifying a task, even with a modification of the associated resources, without rupture of service.

### SUMMARY OF THE INVENTION

To this effect, the invention discloses a scheduler of computer processes to be run on a cluster of physical computing machines, said scheduler comprising: first processing logic configured to split a computer process into a number of elementary computer processes, each of the elementary computer processes having a defined computing load; second processing logic configured to create an Operating-System-Level virtual environment for each elementary computer process, each Operating-System-Level virtual environment having a computing capacity equal to or higher than the computing load of the computer process, wherein the second processing logic is further configured to cause an allocation of each Operating-System-Level virtual environment to a physical machine in the cluster of physical machines.

Advantageously, the second processing logic is configured to cause an allocation of an Operating-System-Level virtual environment to a physical machine having the highest amount of available resources in the cluster of physical machines.

Advantageously, the second processing logic has access to a set of predefined Operating-System-Level virtual environments having a computing capacity associated therewith, and is configured to create, for each elementary computer process, an instance of an Operating-System-Level virtual environment which minimizes an offset between the computing load of an elementary process and the computing capacity of the environment.

Advantageously, upon a modification of a computer process, the first processing logic is configured to detect a change of a computer load of an elementary computer process, and the second processing logic is configured to modify the resources of the Operating-System-Level virtual environment on which the elementary computer process runs.

Advantageously, the second processing logic is configured to set characteristics of the Operating-System-Level virtual environment on which the elementary process runs so that computing capacity of the Operating-System-Level virtual environment is equal to or higher than the computing load of the elementary process, while minimizing an offset between the computing load of the elementary process and the computing capacity of the Operating-System-Level virtual environment.

Advantageously, the first processing logic is configured to split a computer process into a number of elementary computer processes until a computing load of each elementary process is below a threshold of precision.

Advantageously, the first processing logic is configured to split a computer process into a number of elementary computer processes based on the ability of sub-processes of said computer process to execute in parallel.

Advantageously, the first processing logic is configured to calculate a computing load of an elementary computer process by observing parallel executions of a number of instances of said elementary computer process on a reference machine.

Advantageously, each elementary computer process has a plurality of computing loads and each Operating-System-Level virtual environment has a plurality of computing capacities, for a plurality of types of computing loads respectively, wherein the second processing logic is configured to create an Operating-System-Level virtual environment for each elementary computer process, each Operating-System-Level virtual environment having, for each type of computing loads, a computing capacity equal to or higher than a computing load of the computer process.

Advantageously, the second processing logic is configured to create, amongst a plurality of possible Operating-System-Level virtual environment having, for each type of computing loads, a computing capacity equal to or higher than a computing load of the computer process, the Operating-System-Level virtual environment which minimizes an offset between a computing load of the computer process and a computing capacity of the machine, for a type of computing load.

Advantageously, the type of computing load is chosen according to the availability of resources of different types in the cluster of physical machines.

Advantageously, an Operating-System-Level virtual environment is one of a Virtual Machine and a Linux container.

The invention also discloses a computer program product, stored on a computer-readable medium configured to, when it is executed by a processor, schedule computer processes to be run on a cluster of physical computing machines, said computer program product comprising computer code instructions configured to: split a computer process into a number of elementary computer processes, each of the elementary computer processes having a defined computing load; create an Operating-System-Level virtual environment for each elementary computer process, each Operating-System-Level virtual environment having a computing capacity equal to or higher than the computing load of the computer process; cause an allocation of each Operating-System-Level virtual environment to a physical machine in the cluster of physical machines.

The invention also discloses a device configured to schedule computer processes to be run on a cluster of physical computing machines, said device comprising at least one processor configured to: split a computer process into a number of elementary computer processes, each of the elementary computer processes having a defined computing load; create an Operating-System-Level virtual environment for each elementary computer process, each Operating-System-Level virtual environment having a computing capacity equal to or higher than the computing load of the computer process; cause an allocation of each Operating-System-Level virtual environment to a physical machine in the cluster of physical machines.

The invention also discloses a method to schedule computer processes to be run on a cluster of physical computing machines, said method comprising: splitting a computer process into a number of elementary computer processes, each of the elementary computer processes having a defined computing load; creating an Operating-System-Level virtual environment for each elementary computer process, each Operating-System-Level virtual environment having a computing capacity equal to or higher than the computer computing load of the computer process; causing an allocation of each Operating-System-Level virtual environment to a physical machine in the cluster of physical machines.

The invention improves the flexibility of allocation of processes in a cluster of physical machines.

The invention improves the robustness of allocation of processes in a cluster of physical machines.

The invention improves the flexibility of modification of processes to run on a cluster of physical machines, thanks to changes of resources allocated to VMs.

The invention permits the definition of rules of creation and allocation of VMs, that permits saving critical resources on physical machines.

The invention permits a finer load balancing amongst physical machines in a cluster.

### BRIEF DESCRIPTION OF THE DRAWINGS

The invention will be better understood and its various characteristics and advantages will emerge from the following description of a number of exemplary embodiments and its appended figures in which:
- Figure 1a and 1b display respectively processes and machines on which executing such processes, and an example of temporal allocation of processes amongst the machines in the prior art;
- Figure 2 displays an architecture of a scheduler in a number of embodiments of the invention;
- Figure 3 displays a flow chart of a method according to the invention;
- Figures 4a, 4b, 4c and 4d display the result of split, dispatch and modification of processes in an embodiment of the invention;
- Figures 5a, 5b and 5c display the result of the allocation of VMs in a cluster of machines, based on a plurality of types of computing loads in a plurality of embodiments of the invention.

### DETAILED DESCRIPTION OF THE INVENTION

In this specification, the invention will be described by way of examples related to the scheduling of multimedia tasks amongst a plurality of machines. However, the invention is not restricted to these examples and can be applied to any system in which a scheduler separates a complex process into elementary sub-tasks, and dispatches them amongst a plurality of machines. Meanwhile, the description will be focused on the creation and dispatch of Virtual Machines. However, the invention is not restricted to Virtual Machine, but can be applied to the creation and dispatch of any Operating-System-Level Virtual Environment, for example a Virtual Machine or a Linux container.

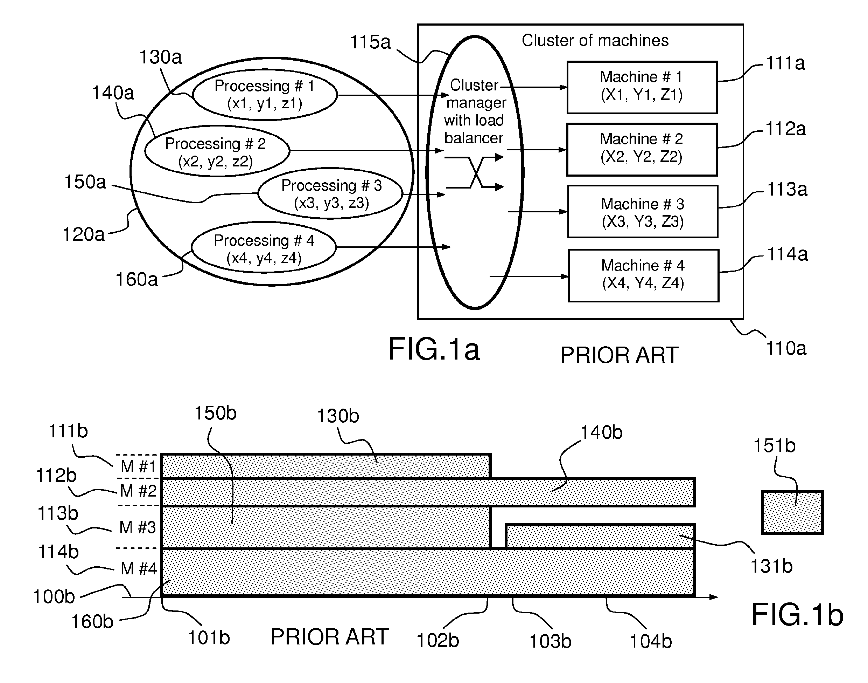

Figures 1a and 1b display respectively processes and machines on which executing such processes, and an example of temporal repartition of processes amongst the machines in the prior art.

Figure 1a displays a cluster of machines 110a on which a set of processes 120a is to be executed in the prior art.

The cluster 110a comprises four machines 111 a, 112a, 113a and 114a, which can for example be Physical or Virtual Machines. It also comprises a Cluster Manager 115a which is configured to allocate each process to execute on one of the four machines 111 a, 112a, 113a and 114a. The cluster manager 115a is configured to balance the process load amongst the machines, in order that the computing load is as balanced as possible amongst the machines.

In this example a set 120a of four processes 130a, 140a, 150a and 160a will be executed by the cluster of machines 110a. The processes are iteratively executed, stopped, and executed again according to operational needs. In this example, processes 130a, 140a, 150a and 160a have computing loads that are respectively equal to the computing capacities of the machines 111a, 112a, 113a and 114a. The computing loads and computing capacities of machine 111a and process 130a are lower than those of machine 112a and process 140a, which are lower than those of machine 113a and process 150a, which are lower than those of machine 160a and process 114a. This means that;
- it is possible to execute the process 130a on any of the machines 111 a, 112a, 113a and 114a;
- it is possible to execute the process 140a on any of the machines 112a, 113a and 114a;
- it is possible to execute the process 150a on any of the machines 113a and 114a;
- it is possible to execute the process 160a only on the machine 114a;

Figure 1b displays the temporal execution of the four processes 130a, 140a, 150a and 160a on the four machines 111 a, 112a, 113a and 114a in the prior art.

Lines 111 b, 112b, 113b and 114b display respectively the temporal execution of processes on machines 111 a, 112a, 113a and 114a. The height of the lines 111 b, 112b, 113b and 114b are respectively representative of the computing capacities of the machines 111 a, 112a, 113a and 114a. The axis 100b represents the time.

At an initial time 101b, four instances 130b, 140b, 150b and 160b of the processes 130a, 140a, 150a and 160a respectively are deployed, respectively on the machines 111 b, 112b, 113b and 114b. At a second time 102b, instances 130b and 150b are stopped. After a short duration, at a third time 103b, a second instance 131b of the process 130a is deployed. In order to balance the computing load amongst the four machines, the cluster manager 115a allocates this second instance 131b on the machine 113a. At a fourth time 104b, the cluster manager 115a is requested to run a second instance 151b of the process 150a. However this is not possible at this stage. Indeed, even though the global computing capacity of the cluster of machines is sufficient to run in parallel instances of the four processes, the machine 111 a does not have sufficient computing capacity to run the instance 151 b, and the machine 113a does not have resources sufficient to run in parallel the instance 131 b and the instance 151 b.

This example demonstrates the limitations of the prior art for scheduling tasks amongst a cluster of machines. Notably, it is difficult to allocate tasks amongst machines when these tasks are intensive tasks having high computing load.

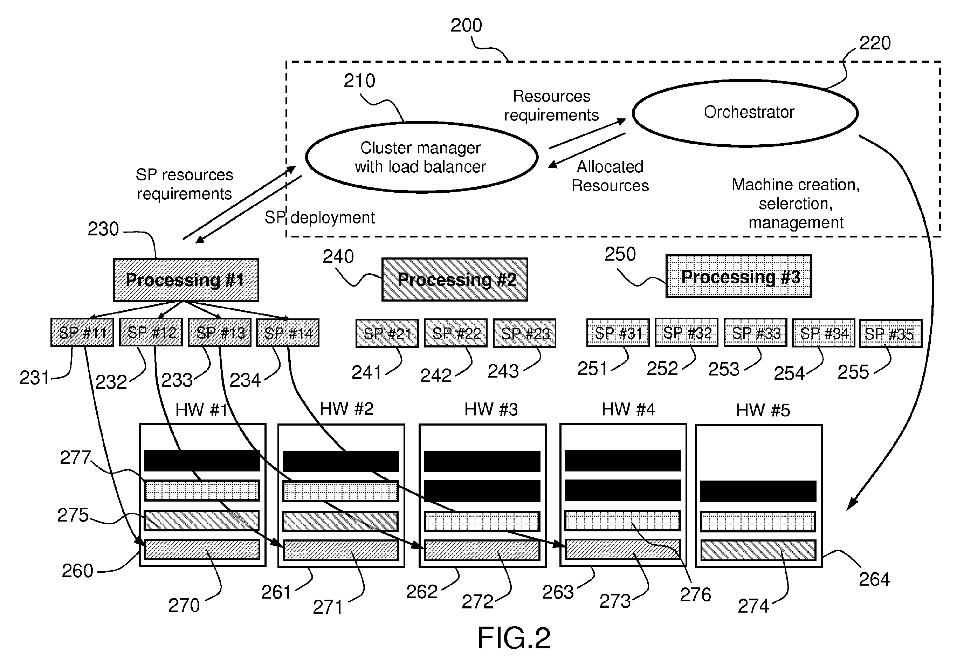

Figure 2 displays an architecture of a scheduler in a number of embodiments of the invention.

The scheduler 200 comprises a first processing logic 210 and a second processing logic 220. According to various embodiments of the invention, the first processing logic 210 and the second processing logic 220 may be embedded in or running on two different processing machines, or on a single processing machine configured with two different sets of code instructions.

The first processing logic is configured to split a computer process into a number of elementary computer processes, each of the elementary computer processes having a defined computing load.

In the example depicted on figure 2, the first processing logic 210 splits three different processes 230, 240 and 250, respectively into four elementary computer processes 231, 232, 234 and 235, three elementary computer processes 241, 242 and 243,and five elementary computer processes 251, 252, 253, 254 and 255. The general principle of splitting a process into elementary computer processes relies on iteratively breaking the operations and functions to execute by the computer process into smaller ones that run in parallel. This principle is particularly suited to split heavy processes having intensive computation tasks that can be run in parallel.

Although applicable to any process having sub-tasks that can be performed in parallel, the invention is particularly suited to operate on multimedia tasks. For example the process 250 can be a multimedia encoding process which is split into 5 elementary processes: demultiplexing input video 251, encoding video 252, encoding audio 253, encoding subtitles 254, and multiplexing output video 255.

In other embodiments of the invention, the processes can be further split. For example, the encoding video process can be further split into video partitioning, motion estimation, bitrate allocation, etc. In a number of embodiments of the invention, processes are split until the computing load of each elementary process is below a precision threshold. In other embodiments of the invention, a process is considered as elementary if it can no longer be broken into sub-processes running in parallel. In yet other embodiments of the invention, a process is recursively split into sub-processes until the computing load used to manage an additional process is equivalent to the computing load of an elementary process. In other embodiments of the invention, a process is considered as elementary when it has at least one input or an at least one output each input and output having a multimedia type. A multimedia type is characterized for example by a multimedia norm or a type of codec. By means of non-limitative examples, examples of elementary processes comprise for example a video encoder, which converts raw video frames into compressed video; an audio encoder, which converts raw audio frame into compressed audio; a video transcoder, which converts compressed video into compressed video, in another format and/or another bitrate; a video demultiplexer, which splits the tracks contained within a file into separate audio/video/subtitle tracks, etc.

The first processing logic 210 is further configured to calculate, for each elementary computer process, a computing load. The computing load is an estimation of the resources needed to run the elementary process, and may for example be a CPU, an amount of RAM, a bandwidth, a combination thereof if a plurality of computing loads are taken into account. More generally, the computing load may represent any resource or combination of resources which is needed to run the elementary computer process.

In a number of embodiments of the invention, a computing load of an elementary process is calculated by running a plurality of instances of the process on a reference machine having known computing capacity while each of the instances is able to execute successfully, and thus determining the maximum number of instances of the elementary process that can successfully run in parallel on the reference machine. The computing load of the elementary process can then be calculated as the computing capacity of the reference machine divided by the maximum number of instances of the elementary process that can successfully run in parallel.

In a number of embodiments of the invention, a computing load of an elementary process is calculated at the moment when the elementary process is created. In other embodiments of the invention, the computing load is pre-calculated for a number of possible elementary processes, and the first processing logic is configured to identify, in a process, the elementary computer processes and associate the corresponding computing load. In an embodiment of the invention, the computing load of a process is the sum of pre-calculated computing loads of elementary processes.

The second processing logic is configured to create a virtual machine for each elementary computer process, each virtual machine having a computing capacity equal to or higher than the computer computing load of the computer process, and the second processing logic is further configured to cause an allocation of each virtual machine to a physical machine in the cluster of physical machines.

The second processing logic 220 is thus configured to create VMs for elementary computer processes, for example the VMs 270, 271, 272, 273, 274 and 275 for the elementary processes 231, 232, 233, 234, 241 and 242 respectively. It is further configured to allocate said VMs on physical machines. In the example depicted on figure 2, it has access to a cluster of 5 physical machines, labeled respectively 260, 261, 262, 263 and 264.

In a number of embodiments of the invention, the second processing logic 220 creates a Virtual Machine for each process having a computing capacity equal to or higher than the computing load of an elementary process, while being as low as possible. In other embodiments of the invention, the second processing logic 220 creates a Virtual Machine for each process having a computing capacity equal to or higher than the computing load of an elementary process to which an offset is added, this offset being representative of the computing load necessary to run the VM itself. Various embodiments are possible to create the VM. For example, the second processing logic 220 may have access to a list or predefined VMs having known computing capacities. The computing capacities of VMs can be determined in advance, for example using the method disclosed in the European Patent application n°15306385. filed the same day by the applicant. According to various embodiments of the invention, the computing capacity of the VMs may be calculated for each VM, for a physical machine having certain characteristics. In other embodiments of the invention, a computing capacity is calculated for pairs of comprising a VM and a physical machine. This means, for example, that the same VM 270 running a physical machine 260 may be characterized by computing capacities different from those of the same VM 270 running on a further physical machine 261.

In a number of embodiments of the invention, an elementary computer process is characterized by a plurality of types of computer loads, for example CPU, memory and bandwidth load. Various criteria of selection of a VM are possible in this case. In a number of embodiments of the invention, the second processing logic is configured to select a VM for which each computing capacity of a given type is equal or higher than the corresponding computing load of the elementary computer process, in order that the computer process successfully runs on the VM.

When more than one VM match this criterion, many criteria of choice are possible. For example, the second processing logic may be configured to calculate an average excess of all computing capacities of the VM compared to the computing loads of the elementary process to create, and select the VM which minimizes the average excess of computing capacities. In other embodiments of the invention, the second processing logic may be configured to favor one of the types of computing loads. It may for example be configured to select, amongst available VMs whose CPU, RAM and bandwidth capacities are respectively higher than the CPU, RAM and bandwidth loads of an elementary process, the one that has the lower CPU capacities, in order to have the lowest offset between the CPU load of the process and the CPU capacity of the VM. This advantageously reduces the unused CPU on a physical machine. Indeed, the CPU reserved by the VM but not used for computing the process can not be used by another process, and will remain unused.

In yet other embodiments of the invention, the second processing logic may be configured to use an indication of the availability of each type of resource on each physical machine, and select a VM in order to save the less available resource. The indication of the availability of each type of resource may be received from each physical machine, or iteratively calculated by the second processing logic 220. For example, it may calculate or receive from the physical machines an indication that 40% of CPU, 60% of RAM and 80%M of bandwidth are used. Then, when creating a VM for running an elementary process, it may be configured to select, amongst all VMs that have a CPU, RAM and bandwidth capacities respectively higher than the CPU, RAM and bandwidth loads of an elementary process, the one that has the lower bandwidth capacity, in order to save the most critical resource on the physical machines at the time of the creation of the VM. In other embodiments of the invention, each resource is associated to a priority (for example, P1 for bandwidth, P2 for memory, P3 for CPU); the second processing logic is configured to select, amongst all VMs that have a CPU, RAM and bandwidth capacities respectively higher than the CPU, RAM and bandwidth loads of an elementary process, the one that has the lowest amount of resources of the highest priority; if at least two machines are possible, the one that has the lowest amount of resources of the next-highest priority; etc..

In a number of embodiments of the invention, the second processing logic 220 is configured to allocate the VM on the physical machine that has the highest amount of resources available. In combination with the creation of VM that have the lowest possible computing load that allows the successful execution of an elementary process, this favors a balanced dispatching of the computing load amongst the physical machines.

Similarly to the creation of a VM, when a plurality of types of computing capacities are taken into account, a plurality of rules to allocate a VM to a physical machine are possible. For example, the second processing logic can be configured to allocate a VM to the physical machine that has, on average, the most resources available.

In other embodiments of the invention, it may be configured to allocate a VM to the physical machine so that, after the allocation, a maximum percentage of each resource is available on every machine. In an exemplary case, two physical machines A and B having the same amount of CPU and RAM are available, A having 50% of its CPU and 60% of its RAM used, and B having 60% of its CPU and 50% of its RAM used, and a VM V is created for a new process, having a computing load of 5% of CPU and 10% of RAM of one of A et B. Allocating V to A would result in A having 55% of CPU and 70% of RAM used, and B having 60% of CPU and 50% of RAM used. By contrast, allocating V to B would result in A having 50% of CPU and 60% of RAM used, while B has 65% of CPU and 60% of RAM used. In the former case, the maximum usage of all resources on all physical machines is 70%, while in the later it is 65%. In a number of embodiments of the invention, the second processing logic is configured to allocate VM to physical machines in order to select the most balanced resource allocation, and would then allocate V to B.

In yet other embodiments of the invention, the second processing logic may be configured to favor the availability of one type of resources, for example to have the maximum amount of CPU available on each machine.

In a number of applications, the elementary computer processes need to communicate. In the example of the process 250 described above, the elementary process of demultiplexing input video 251 needs to provide demultiplexed video to the encoding video process 252, demultiplexed audio to encoding audio process 253, demultiplexed subtitles to encoding subtitles process 254, while encoding video process 252, encoding audio process 253, encoding subtitles process 254 need to provide their respective outputs to the multiplexing output video process 255.

When allocating a VM on a physical machine, the first processing logic 220 retrieves all information necessary to communicate with virtual machine. Thus, the elementary process, when communicating with each other amongst different virtual machines, have all the information necessary to send data across physical and virtual machines.

In a number of embodiments of the invention, the scheduler 200 is further configured to modify the resources of the VMs upon a modification of a process, for example, one of the processes 230, 240 and 250. For example, a modification of the multimedia encoding process 250 may occur if the video needs to be delivered with a higher quality / rate ratio, and the subtitles are no longer needed.

Upon a modification of a process, the first process logic is configured to re-evaluate the elementary computer processes into which the process is split, and their respective processing loads. It is thus able to detect the elementary computer processes which are, upon the modification of the process, created, removed or whose computing load is modified. In the example above, upon the modification of the multimedia process 250, the encoding subtitle process 254 is removed, since subtitles are not anymore necessary, and the computing load of encoding video process 252 increases, since the video needs to be encoded using a higher quality-rate ratio, which implies performing more complex operations to encode the video.

The first processing logic 210 is then configured to indicate these changes to the second processing logic 220, which is configured to modify the resources of the VMs accordingly. In the example above, the second processing logic increases the resources of the VM 276 on which the video encoding elementary process 252 runs, and removes the VM 277, on which the subtitles encoding elementary process 254 runs.

In a number of embodiments of the invention the modification of the resources of a VM aims at obtaining a VM that has a computing capacity equal or above the modified computing load of the process that runs on it. In a number of embodiments of the invention, the second processing logic is configured to modify the resources of the VM so that it has a computing capacity which is the closest possible above the modified computing load of the process.

In a number of embodiments of the invention, the second processing logic is configured to select, amongst a list of predefined VMs, the VM whose computing capacity best matches the modified computing load of the elementary process, and to modify the resources of the VM on which the elementary process runs in order to match the resources of the selected predefined VM.

Advantageously, the balance of load at the creation of each process leaves on each physical machine a sufficient amount of resources to modify the resources allocated to a VM upon a modification of the elementary computer process running on it.

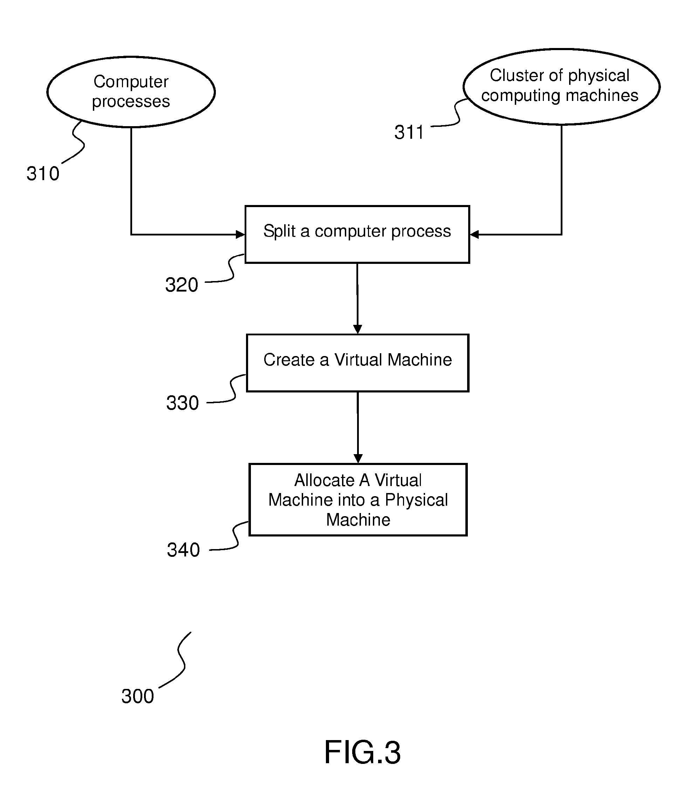

Figure 3 displays a flow chart of a method according to the invention.

The method 300 aims at scheduling computer processes 310 to be run on a cluster of physical computing machines 311.

The method 300 comprises a first step 320 of splitting a computer process into a number of elementary computer processes, each of the elementary computer processes having a defined computing load. It can for example be performed by a first computing logic 210 displayed with reference to figure 2. As disclosed with reference to figure 2, numerous embodiments of processes to split computer processes are possible.

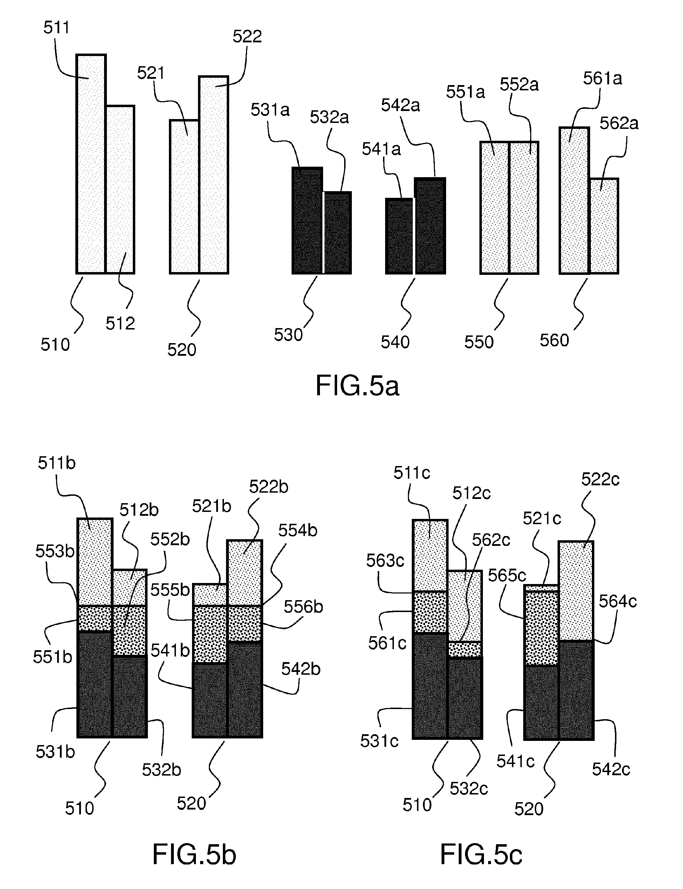

The method 300 comprises a second step 330 of creating a virtual machine for each elementary computer process, each virtual machine having a computing capacity equal to or higher than the computer computing load of the computer process. Several embodiments of creating a virtual machine for a computer process are possible. The creation of Virtual Machine may correspond for example to rules of optimization of resources. Examples of embodiments are disclosed with reference to figure 2, 5b and 5c.

The method 300 comprises a third step 340 of causing an allocation of each virtual machine to a physical machine in the cluster of physical machines. This step aims at allocating a Virtual Machine for performing one of the processes 310 to one of the computing machines 311.Several rules of allocation are possible, for example allocating a Virtual Machine on a physical machine in order to balance computing load amongst physical machines. Examples of embodiments and rules of allocation are disclosed with reference to figure 2, 4a, 4b, 4c, 4d, 5b and 5c.

The method 300 can be executed in a scheduler, for example the scheduler 200. It may also be executed in an application for managing Virtual and Physical machines.

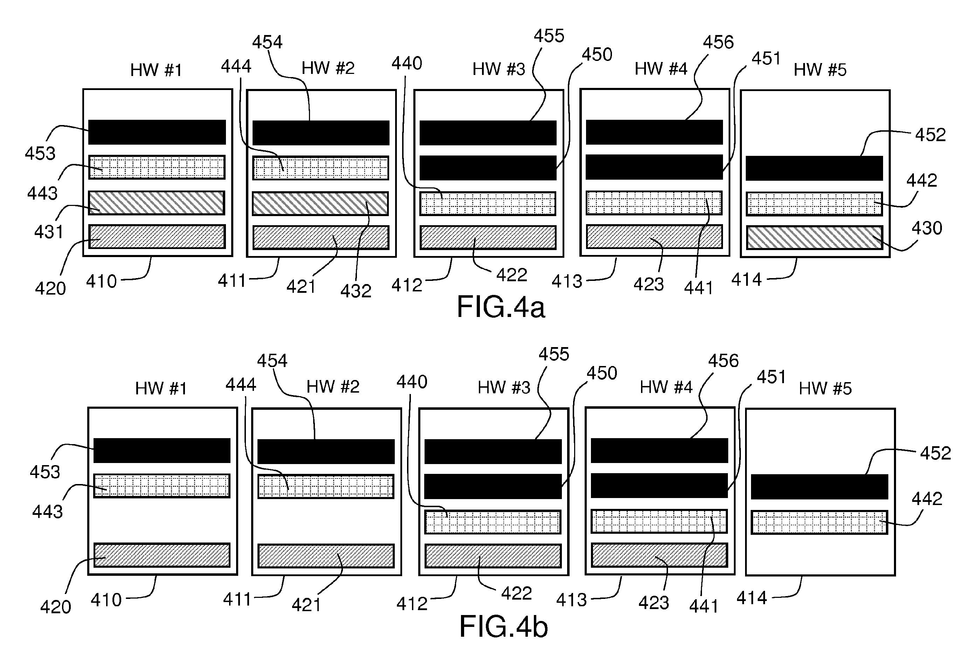

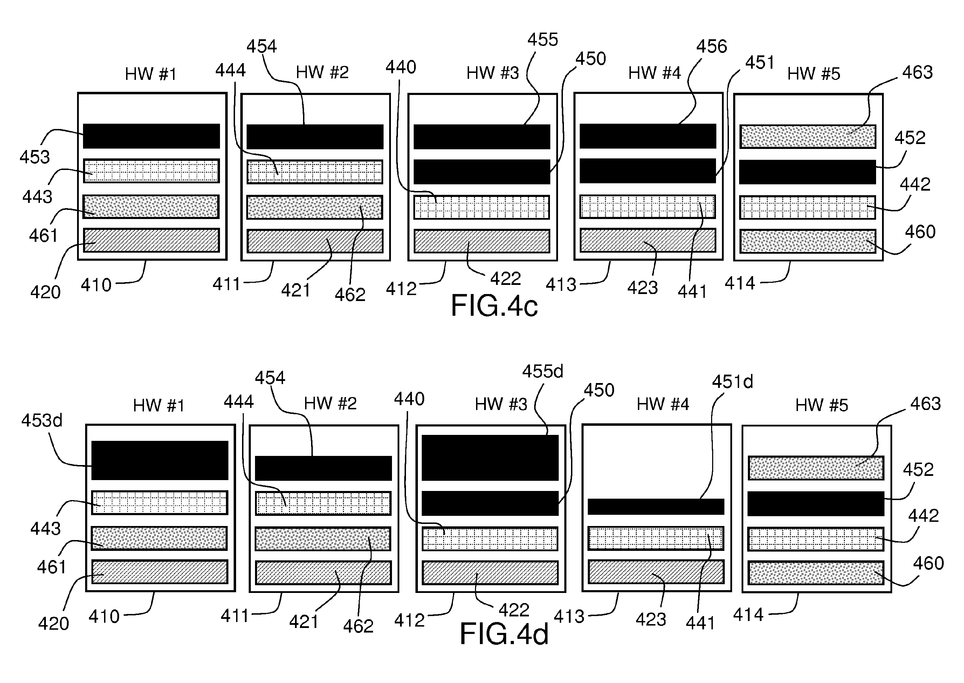

Figures 4a, 4b, 4c and 4d display the result of split, dispatch and modification of processes in an embodiment of the invention.

The operation described with reference to figures 4a, 4b, 4c and 4d, given by means of non limitative example only of an embodiment of the invention, can for example be performed by a scheduler 200 or a method 300 according to the invention.

Figure 4a displays an initial deployment of 4 processes amongst 5 physical machines, respectively labeled 410, 411, 412, 413 and 414 in an exemplary embodiment of the invention.

Initially four processes are dispatched:
- A first process, split into elementary processes run by VMs 420, 421, 422 and 423 respectively;
- A second process, split into elementary processes run by VMs 430, 431 and 432 respectively;
- A third process, split into elementary processes run by VMs 440, 441, 442, 443 and 444 respectively;
- A fourth process, split into elementary processes run by VMs 450, 451, 452, 453, 454, 455 and 456 respectively;

In order to ease the description, with reference to figures 4a, 4b, 4c and 4d, the numerical references 420, 421, 422, 423, 430, 431, 432, 440, 441, 442, 443, 444, 450, 451, 452, 453, 454, 455, 456, 460, 461, 462, 463, 451 d, 453d, 455d will designate in the same time an elementary process and the VM that is created to run this elementary process. These references are unambiguous, since in this example a single VM is associated to each elementary process, and a single elementary process to each VM.

In the figures 4a, 4b, 4c and 4d, the height of the rectangles 410, 411, 412, 413 and 414 represent the respective computing capacities of the machines, while the height of the rectangles under references 420, 421, 422, 423, 430, 431, 432, 440, 441, 442, 443, 44, 450, 451, 452, 453, 454, 455, 456, 460, 461, 462, 463, 451 d, 453d and 455d are representative of the computing capacities of the corresponding VMs, and are equal or greater than the computing loads of the corresponding elementary processes.

In this example, for each process, the VMs are added in order to balance the load between the VMs, by successively allocating the VMs on the hardware machines 410, 411, 412, 413 and 414.

Figure 4b displays the result of the removal of the second process on the 5 physical machines, in an exemplary embodiment of the invention.

In this example, the second process is stopped. The VMs 430, 431 and 432 that were executing the corresponding elementary processes do not run any longer on the physical machines. This removal frees resources on the three physical machines 410, 411, and 413 on which the VMs 430, 431 and 432 wererunning.

Figure 4c displays the result of the addition of a fifth process, split into four elementary processes 460, 461, 462 and 463.

In this example, the four elementary processes 460, 461, 462 and 463 have a computing load which is identical to the elementary processes 430, 431 and 432. In order to balance the computing load amongst the five physical machines, the VMs 460, 461, 462 respectively replace the VMs 430, 431 and 432 in physical machines 410, 411 and 414. Meanwhile, the VM 463 is allocated to the physical machine 414, in order to obtain the best balance of computing loads between the five physical machines.

Figure 4d displays the result of the modification of the fourth processes.

As disclosed above, the modification of a process can result in an addition, removal of elementary processes and corresponding VMs. It can also result in a modification of the computing load of the process, and a corresponding modification of computing capacity of a VM.

In this example, the elementary process 456 is not used anymore and has been removed. Meanwhile, the computing load of the processes 451, 453, 455 is modified. The resources of the corresponding VMs are modified accordingly, the VMs 451, 453 and 455 with modified resources are respectively displayed under the references 451 d, 453d and 455d. The computing load of the elementary process 451 diminished: the computing capacity of VM 451 d thus diminished. On the other hand, the computing loads of the elementary processes 453 and 455 increased: the computing capacities of the corresponding VMs 453d and 455d thus increased accordingly.

In this example, the sum of the processing capacities of the VMs on the physical machines 410 and 412 are respectively lower than the computing capacities of these physical machines. Indeed, balancing the load amongst physical machines when adding elementary processes permits to have a higher chance that an increase of the computing capacity of a VM does not cause an excess of the computing capacity of the physical machine on which this VM is allocated.

Figures 5a, 5b and 5c display the result of the allocation of VMs in a cluster of machines, based on a plurality of types of computing loads in a plurality of embodiments of the invention.

Figure 5a displays two physical machines 510 and 520. In this example, given by way of non limitative example of embodiments of the invention, each physical machine is characterized by two types of computing capacities. These two types of computing capacities can for example be CPU, RAM, bandwidth, etc... The two computing capacities of the physical machine are represented by bars 511 and 512, whose heights represent respectively the computing capacities of the first type and the second type of machine 510. Similarly, the heights of bars 521 and 522 represent respectively the computing capacities of the first type and second type of machine 520.

Figure 5a also displays the computing loads of two elementary processes 530 and 540. The heights of bars 531 a and 532a display respectively the computing loads of the first type and the second type of the elementary process 530; the heights of bars 541 a and 542a display respectively the computing loads of the first type and the second type of the elementary process 540.

Figure 5a also displays the computing capacities of two VMs 550 and 560, that can be created to run the two processes 530 and 540. The heights of bars 551 a and 552a display respectively the computing capacities of the first type and the second type of VM 550; the heights of bars 561 a and 562a display respectively the computing capacities of the first type and the second type of the VM 560.

The computing capacities of VMs 550 and 560 are higher than the computing loads of the elementary processes 530 and 540. Thus, in a number of embodiments of the invention, each one of the two VMs 550 and 560 can be created in order to run the elementary processes 530 and 540, and they can be allocated either on physical machine 510 or on physical machine 520. According to various embodiments of the invention, different rules of creation and allocation of VMs are possible, for example in order to save preferably different resources on the physical machines.

Figure 5b displays a first example of creation and allocation of VMs in a number of embodiments of the invention. In this example, rules of creation and allocation of VMs are designed in order to save preferably the first resource (for example, memory) on the physical machines.

Thus, an instance 553b of VM 550 is created in order to run process 530, and an instance 554b of the VM 550 is created in order to run process 540, and instances 553b and 554b are allocated respectively on machines 510 and 520.

The computing loads of the first and second processes for the first and second resources are displayed respectively by bars 531 b, 532b, 541b and 542b. The computing capacities of instances 553b and 554b for the first and second resources, which are allocated but not used for running the processes 530 and 540, are displayed respectively by bars 551 b, 552b, 555b and 554b. The computing capacities of physical machines 510 and 520 for the first and second resources, which remain usable are displayed respectively by bars 511 b, 512b, 521 b and 522b.

Creating instances of VM 550 rather than instances of VM 560 allows saving resources of the first type on the physical machines. Indeed, both VM 550 and 560 have enough computing capacities to run processes 530 and 540, for the two types of resources. Meanwhile, the computing capacity for the first resource of VM 550, represented by bar 551 a, is lower than the computing capacity for the first resource of VM 560, represented by bar 561 a.

Thus, computing capacities 551b and 555b of the first type that are allocated to instances 553b and 554b, but not used, are lower than if instances of VM 560 were created, while the computing capacities of the first type 511b and 521 b that remain usable on the two physical machines are higher.

Figure 5c displays a second example of creation and allocation of VMs in a number of embodiments of the invention. In this example, rules of creation and allocation of VMs are designed in order to save preferably the second resource (for example, CPU) on the physical machines.

Thus, an instance 563c of VM 560 is created in order to run the process 530, and an instance 564c of VM 560 is created in order to run process 540, and instances 563c and 564c are allocated respectively on machines 510 and 520.

The computing loads of the first and second processes for the first and second resources are displayed respectively by bars 531 c, 532c, 541 c and 542c. The computing capacities of instances 563c and 564c for the first and second resources, which are allocated but not used, for running processes 530 and 540 are displayed respectively by bars 561 c, 562c, 565c. Meanwhile, the computing capacity of VM 560 is exactly equal to the computing load of the elementary process 540 for the second resource. Thus all the resources of the second type allocated to instance 564c are used for running elementary process 540. The computing capacities of physical machines 510 and 520 for the first and second resources, which remain usable, are displayed respectively by bars 511 c, 512c, 521 c and 522c.

Creating instances of VM 560 rather than instances of VM 550 allows saving resources of the second type on the physical machines. Indeed, both VM 550 and 560 have enough computing capacities to run processes 530 and 540, on the two types of resources. Meanwhile, the computing capacity for the second resource of VM 560, represented by bar 562a, is lower than the computing capacity for the second resource of VM 550, represented by bar 552a.

Thus, the computing capacities 562c of the second type that is allocated for instance 553c, but not used, is lower than if an instance of VM 550 were created, while there is no computing capacity of the second type that is allocated but not used for instance 554c. Meanwhile the computing capacities of the second type 512c and 522c, which remain usable on the two physical machines, are higher than the computing capacities 512b and 522b which remain usable when instance of the VM 540 are created.

The examples above demonstrate the ability, according to the invention, to define complex rules of creation and allocation of VMs in order to save resources of different types on physical machines, while ensuring that all types of allocated resources are sufficient to run each elementary process.

The examples described above are given as illustrations of embodiments of the invention. They do not in any way limit the scope of the invention which is defined by the following claims.

## Claims

1. A scheduler of computer processes (230, 240, 250) to be run on a cluster of physical computing machines (270, 271, 272, 273, 274), said scheduler comprising:
- First processing logic (210) configured to split a computer process into a number of elementary computer processes, each of the elementary computer processes having a defined computing load;
- Second processing logic (220) configured to create an Operating-System-Level virtual environment for each elementary computer process, each Operating-System-Level virtual environment having a computing capacity equal to or higher than the computing load of the computer process, wherein the second processing logic is further configured to cause an allocation of each Operating-System-Level virtual environment to a physical machine in the cluster of physical machines.

2. The scheduler of claim 1, wherein the second processing logic is configured to cause an allocation of an Operating-System-Level virtual environment to a physical machine having the highest amount of available resources in the cluster of physical machines.

3. The scheduler of one of claims 1 to 2, wherein the second processing logic has access to a set of predefined Operating-System-Level virtual environments having a computing capacity associated therewith, and is configured to create, for each elementary computer process, an instance of an Operating-System-Level virtual environment which minimizes an offset between the computing load of an elementary process and the computing capacity of the environment.

4. The scheduler of one of claims 1 to 3, wherein, upon a modification of a computer process, the first processing logic is configured to detect a change of a computer load of an elementary computer process, and the second processing logic is configured to modify the resources of the Operating-System-Level virtual environment on which the elementary computer process runs.

5. The scheduler of claim 4, wherein the second processing logic is configured to set characteristics of the Operating-System-Level virtual environment on which the elementary process runs so that computing capacity of the Operating-System-Level virtual environment is equal to or higher than the computing load of the elementary process, while minimizing an offset between the computing load of the elementary process and the computing capacity of the Operating-System-Level virtual environment.

6. The scheduler of one of claims 1 to 5, wherein the first processing logic is configured to split a computer process into a number of elementary computer processes until a computing load of each elementary process is below a threshold of precision.

7. The scheduler of one of claims 1 to 5, wherein the first processing logic is configured to split a computer process into a number of elementary computer processes based on the ability of sub-processes of said computer process to execute in parallel.

8. The scheduler of one of claims 1 to 7, wherein the first processing logic is configured to calculate a computing load of an elementary computer process by observing parallel executions of a number of instances of said elementary computer process on a reference machine.

9. The scheduler of one of claims 1 to 8, wherein each elementary computer process has a plurality of computing loads and each Operating-System-Level virtual environment has a plurality of computing capacities, for a plurality of types of computing loads respectively, wherein the second processing logic is configured to create an Operating-System-Level virtual environment for each elementary computer process, each Operating-System-Level virtual environment having, for each type of computing loads, a computing capacity equal to or higher than a computing load of the computer process.

10. The scheduler of claim 9, wherein the second processing logic is configured to create, amongst a plurality of possible Operating-System-Level virtual environment having, for each type of computing loads, a computing capacity equal to or higher than a computing load of the computer process, the Operating-System-Level virtual environment which minimizes an offset between a computing load of the computer process and a computing capacity of the machine, for a type of computing load.

11. The scheduler of claim 10, wherein the type of computing load is chosen according to the availability of resources of different types in the cluster of physical machines.

12. The scheduler of one of claims 1 to 11, wherein an Operating-System-Level virtual environment is one of a Virtual Machine and a Linux container.

13. A computer program product, stored on a computer-readable medium configured to, when it is executed by a processor, schedule computer processes to be run on a cluster of physical computing machines, said computer program product comprising computer code instructions configured to:
- split a computer process into a number of elementary computer processes, each of the elementary computer processes having a defined computing load;
- create an Operating-System-Level virtual environment for each elementary computer process, each Operating-System-Level virtual environment having a computing capacity equal to or higher than the computing load of the computer process;
- cause an allocation of each Operating-System-Level virtual environment to a physical machine in the cluster of physical machines.

14. A device configured to schedule computer processes to be run on a cluster of physical computing machines, said device comprising at least one processor configured to:
- split a computer process into a number of elementary computer processes, each of the elementary computer processes having a defined computing load;
- create an Operating-System-Level virtual environment for each elementary computer process, each Operating-System-Level virtual environment having a computing capacity equal to or higher than the computing load of the computer process;
- cause an allocation of each Operating-System-Level virtual environment to a physical machine in the cluster of physical machines.

15. A method to schedule computer processes to be run on a cluster of physical computing machines, said method comprising:
- splitting a computer process into a number of elementary computer processes, each of the elementary computer processes having a defined computing load;
- creating an Operating-System-Level virtual environment for each elementary computer process, each Operating-System-Level virtual environment having a computing capacity equal to or higher than the computer computing load of the computer process;
- causing an allocation of each Operating-System-Level virtual environment to a physical machine in the cluster of physical machines.
